# EUROPEAN PATENT SPECIFICATION

(11) **EP 3 869 385 B1**
(45) Date of publication and mention of the grant of the patent: **06.03.2024**
(21) Application number: 18941952.6
(22) Date of filing: 07.12.2018
(51) Int. Cl.: G06N 3/08, G06V 10/25, G06V 10/44, G06V 10/82, G06V 30/40, G06V 30/19, G06N 3/045

(54) **METHOD FOR EXTRACTING STRUCTURAL DATA FROM IMAGE, APPARATUS AND DEVICE**
VERFAHREN ZUR EXTRAKTION VON STRUKTURDATEN AUS EINEM BILD, GERÄT UND VORRICHTUNG
PROCÉDÉ D'EXTRACTION DE DONNÉES STRUCTURELLES D'UNE IMAGE, APPAREIL ET DISPOSITIF

(43) Date of publication of application: 25.08.2021
(73) Proprietor: Huawei Cloud Computing Technologies Co., Ltd., Guizhou 550025 (CN)
(72) Inventor: YE, Yibin, Shenzhen, Guangdong 518129, (CN); ZHU, Shenggao, Shenzhen, Guangdong 518129, (CN); WANG, Jing, Shenzhen, Guangdong 518129, (CN); DU, Qi, Shenzhen, Guangdong 518129, (CN); LIANG, Hui, Shenzhen, Guangdong 518129, (CN); TU, Dandan, Shenzhen, Guangdong 518129, (CN)
(74) Representative: MERH-IP Matias Erny Reichl Hoffmann Patentanwälte PartG mbB
(86) International application number: PCT/CN2018/119804
(87) International publication number: WO 2020/113561

(56) References cited:
- EP-A1- 2 202 645
- US-A1- 2018 342 061
- WAN-SHIOU YANG ET AL: "Selecting Structural Patterns for Classification", 20050103; 20050103 - 20050106, 3 January 2005 (2005-01-03), pages 55a-55a, XP010762356,
- YUN LI ET AL: "Efficient feature selection for high-dimensional data using two-level filter", MACHINE LEARNING AND CYBERNETICS, 2004. PROCEEDINGS OF 2004 INTERNATIO NAL CONFERENCE ON SHANGHAI, CHINA AUG. 26-29, 204, PISCATAWAY, NJ, USA,IEEE, PISCATAWAY, NJ, USA, vol. 3, 26 August 2004 (2004-08-26), pages 1711-1716, XP010760595, DOI: 10.1109/ICMLC.2004.1382051 ISBN: 978-0-7803-8403-3
- CHIDLOVSKII BORIS ET AL: "Scalable Feature Selection for Multi-class Problems", 15 September 2008 (2008-09-15), ICIAP: INTERNATIONAL CONFERENCE ON IMAGE ANALYSIS AND PROCESSING, 17TH INTERNATIONAL CONFERENCE, NAPLES, ITALY, SEPTEMBER 9-13, 2013. PROCEEDINGS; [LECTURE NOTES IN COMPUTER SCIENCE; LECT.NOTES COMPUTER], SPRINGER, BERLIN, HEIDELBERG, PAGE(S) 227 - 2, XP047462506, ISBN: 978-3-642-17318-9 * abstract *
- BULATOV KONSTANTIN ET AL: "Smart IDReader: Document Recognition in Video Stream", 2017 14TH IAPR INTERNATIONAL CONFERENCE ON DOCUMENT ANALYSIS AND RECOGNITION (ICDAR), IEEE, vol. 6, 9 November 2017 (2017-11-09), pages 39-44, XP033307467, DOI: 10.1109/ICDAR.2017.347 [retrieved on 2018-01-25]
- Sindhu: "Information Extraction from ID Cards - Using YOLOv2", , 4 July 2018 (2018-07-04), pages 1-4, XP055632832, Retrieved from the Internet: URL:https://blog.francium.tech/information -extraction-from-id-cards-using-yolov2-e3c 846cb3796 [retrieved on 2019-10-16]
- LIEM HOANG DANH ET AL: "FVI: An End-to-end Vietnamese Identification Card Detection and Recognition in Images", 2018 5TH NAFOSTED CONFERENCE ON INFORMATION AND COMPUTER SCIENCE (NICS), IEEE, 23 November 2018 (2018-11-23), pages 338-340, XP033495134, DOI: 10.1109/NICS.2018.8606831 [retrieved on 2019-01-09]

## Description

### TECHNICAL FIELD

This application relates to the field of computer technologies, and in particular, to a method for extracting structured data from an image, an apparatus configured to perform the method, and a computing device.

### BACKGROUND

With the advent of artificial intelligence and big data, extracting structured data from an image has become a hot research topic, and the extracted structured data is easily stored in a database and used. Currently, a structured data extraction solution is widely used in a resource management system and a bill system of any enterprise, a hospital medical information management system, an education all-in-one card system, and the like.

Conventional structured data extraction is an independent technology used after image text detection and image text identification are performed. Therefore, accuracy of the structured data extraction is greatly affected by accuracy of the text identification that is performed before the structured data extraction. Consequently, structured data is inaccurately extracted from an image with a relatively complex layout. In addition, a conventional process from image input to structured data extraction completion consumes a large quantity of computing resources and a long period of time.

Document EP 2 202 645 A1 generally discloses a method for automatically identifying features that are suitable for use by a classifier in assigning class labels to text sequences extracted from noisy documents. The method includes receiving a dataset of text sequences, automatically identifying a set of patterns in the text sequences, and filtering the patterns to generate a set of features. The filtering includes at least one of filtering out redundant patterns and filtering out irrelevant patterns. The method further includes outputting at least some of the features in the set of features, optionally after fusing features which are determined not to affect the classifiers accuracy if they are merged.

### SUMMARY

This application provides a method for extracting structured data from an image. This method improves structured data extraction efficiency and accuracy by using an image text extraction model and a text identification model. Embodiments of the present invention are defined by the independent claims. Additional features of embodiments of the invention are presented in the dependent claims. In the following, parts of the description and drawings referring to former embodiments which do not necessarily comprise all features to implement embodiments of the claimed invention are not represented as embodiments of the invention but as examples useful for understanding the embodiments of the invention. Embodiments of the present application (or the present disclosure) provide a method for extracting structured data from an image, an apparatus for extracting structured data from an image, a computing device system, a non-transitory readable storage medium, and a computer program product.

According to a first aspect, this application provides a method for extracting structured data from an image. The method is performed by a computing device system. The method includes: obtaining a first information set and a second information set in the image by using a multi-class deep neural network based image text extraction model, where the image includes at least one piece of structured data; obtaining at least one text subimage in the image based on at least one piece of first information included in the first information set; identifying text information in the at least one text subimage; and obtaining at least one piece of structured data in the image based on the text information in the at least one text subimage and at least one piece of second information included in the second information set. The at least one piece of first information indicates text location information, and the text location information indicates a location of the at least one text subimage in the image. The at least one piece of second information indicates text attribute information, and the text attribute information indicates an attribute of the text information in the at least one text subimage. Each piece of structured data includes the text attribute information and the text information. According to the method, the structured data is extracted from the image without sequentially using three models: a text location detection model, a text identification model, and a structured data extraction model, and the structured data can be obtained only by combining text attribute information that is output by the image text extraction model with text information that is output by a text identification model, thereby improving structured data extraction efficiency, preventing structured data extraction accuracy from being affected by erroneous superposition of a plurality of models, and improving the structured data extraction accuracy.

In a possible implementation of the first aspect, the multi-class deep neural network based image text extraction model includes a backbone network, at least one feature fusion subnetwork, at least one classification subnetwork, and at least one bounding box regression subnetwork. The obtaining a first information set and a second information set in the image by using a multi-class deep neural network based image text extraction model includes: The image is input into the backbone network, and feature extraction is performed on the image and at least one feature tensor is output through the backbone network. Each feature tensor that is output by the backbone network is input into a feature fusion subnetwork, and a fusion feature tensor corresponding to the feature tensor is obtained through the feature fusion subnetwork. The fusion feature tensor is input into a classification subnetwork and a bounding box regression subnetwork. The bounding box regression subnetwork locates a text subimage in the image based on a first candidate box corresponding to the fusion feature tensor, to obtain the at least one piece of first information. The classification subnetwork classifies a text attribute in the image based on a second candidate box corresponding to the fusion feature tensor, to obtain the at least one piece of second information. The image text extraction model is essentially a multi-class deep neural network, and the text attribute information and the text location information that are output by the image text extraction model play a key role in structured data extraction, thereby improving structured data extraction efficiency.

In a possible implementation of the first aspect, each feature fusion subnetwork includes at least one parallel convolutional layer and a fuser. That each feature tensor that is output by the backbone network is input into a feature fusion subnetwork, and a fusion feature tensor corresponding to the feature tensor is obtained through the feature fusion subnetwork includes: The feature tensor that is output by the backbone network is input into each of the at least one parallel convolutional layer. An output of each of the at least one parallel convolutional layer is input into the fuser. The fuser fuses the output of each of the at least one parallel convolutional layer, and outputs the fusion feature tensor corresponding to the feature tensor. The feature fusion subnetwork further performs feature extraction and fusion on each feature tensor that is output by the backbone network, thereby improving accuracy of the entire image text extraction model.

In a possible implementation of the first aspect, that the bounding box regression subnetwork locates a text subimage in the image based on a first candidate box corresponding to the fusion feature tensor, to obtain the at least one piece of first information further includes: obtaining, based on a preset height value and a preset aspect ratio value, the first candidate box corresponding to the fusion feature tensor.

In a possible implementation of the first aspect, that the classification subnetwork classifies a text attribute in the image based on a second candidate box corresponding to the fusion feature tensor, to obtain the at least one piece of second information further includes: obtaining, based on a preset height value and a preset aspect ratio value, the second candidate box corresponding to the fusion feature tensor.

Shapes of the first candidate box and the second candidate box that are obtained according to the foregoing method more conform to a feature of a text area, thereby improving accuracy of the obtained text location information and text attribute information.

According to a second aspect, this application provides an image text extraction model training method. The method includes: A parameter in an image text extraction model is initialized. The image text extraction model reads a training image in a training data set. A backbone network performs feature extraction on the training image, and outputs at least one feature tensor. Each feature tensor that is output by the backbone network is input into a feature fusion subnetwork, and the feature fusion subnetwork outputs a corresponding fusion feature tensor. Each fusion feature tensor is separately input into a classification subnetwork and a bounding box regression subnetwork, and the classification subnetwork and the bounding box regression subnetwork separately perform candidate area mapping on each fusion feature tensor, to predict a candidate area corresponding to each fusion feature tensor. The parameter in the image text extraction model is updated based on a loss function between a prediction result and a training image annotation result.

In a possible implementation of the second aspect, the training image in the training data set includes at least one piece of structured data, and some text areas in the training image are annotated by boxes with attribute information.

In a possible implementation of the second aspect, each feature fusion subnetwork includes at least one parallel convolutional layer and at least one fuser. That each feature tensor that is output by the backbone network is input into a feature fusion subnetwork, and the feature fusion subnetwork obtains a fusion feature tensor corresponding to the feature tensor includes: The feature tensor that is output by the backbone network is input into each of the at least one parallel convolutional layer. An output of each of the at least one parallel convolutional layer is input into the fuser. The fuser fuses the output of each of the at least one parallel convolutional layer, and outputs the fusion feature tensor corresponding to the feature tensor.

In a possible implementation of the second aspect, that the parameter in the image text extraction model is updated based on a loss function between a prediction result and a training image annotation result includes: computing, based on a text attribute prediction result that is output by the classification subnetwork, a difference between the text attribute prediction result and a real text attribute annotation of the training image, to obtain a text attribute loss function value; and updating the parameter in the image text extraction model based on the text attribute loss function value.

In a possible implementation of the second aspect, that the parameter in the image text extraction model is updated based on a loss function between a prediction result and a training image annotation result includes: computing, based on a text location prediction result that is output by the bounding box regression subnetwork, a difference between the text location prediction result and a real text location annotation of the training image, to obtain a text location loss function value; and updating the parameter in the image text extraction model based on the text location loss function value.

According to a third aspect, this application provides an apparatus for extracting structured data from an image. The apparatus includes: a multi-class deep neural network image text extraction model, configured to obtain a first information set and a second information set in the image, where the image includes at least one piece of structured data; a text subimage capture module, configured to obtain at least one text subimage in the image based on at least one piece of first information included in the first information set; a text identification model, configured to identify text information in the at least one text subimage; and a structured data constitution module, configured to obtain at least one piece of structured data in the image based on a combination of the text information in the at least one text subimage and at least one piece of second information included in the second information set. The at least one piece of first information indicates text location information, and the text location information indicates a location of the at least one text subimage in the image. The at least one piece of second information indicates text attribute information, and the text attribute information indicates an attribute of the text information in the at least one text subimage. Each piece of structured data includes the text attribute information and the text information. According to the apparatus, the structured data is extracted from the image without sequentially using three models: a text location detection model, a text identification model, and a structured data extraction model, and the structured data can be obtained only by combining text attribute information that is output by the image text extraction model with text information that is output by the text identification model, thereby improving structured data extraction efficiency, preventing structured data extraction accuracy from being affected by erroneous superposition of a plurality of models, and improving the structured data extraction accuracy.

In a possible implementation of the third aspect, the multi-class deep neural network based image text extraction model includes a backbone network, at least one feature fusion subnetwork, at least one classification subnetwork, and at least one bounding box regression subnetwork. The multi-class deep neural network based image text extraction model is configured to: input the image into the backbone network, where the backbone network is used to perform feature extraction on the image and output at least one feature tensor; input each feature tensor that is output by the backbone network into a feature fusion subnetwork, where the feature fusion subnetwork is used to obtain a fusion feature tensor corresponding to the feature tensor; and input the fusion feature tensor into a classification subnetwork and a bounding box regression subnetwork, where the bounding box regression subnetwork is used to locate a text subimage in the image based on a first candidate box corresponding to the fusion feature tensor, to obtain the at least one piece of first information; and the classification subnetwork is used to classify a text attribute in the image based on a second candidate box corresponding to the fusion feature tensor, to obtain the at least one piece of second information.

In a possible implementation of the third aspect, each feature fusion subnetwork includes at least one parallel convolutional layer and a fuser. The feature fusion subnetwork is used to input the feature tensor that is output by the backbone network into each of the at least one parallel convolutional layer, and input an output of each of the at least one parallel convolutional layer into the fuser. The fuser is configured to fuse the output of each of the at least one parallel convolutional layer, and output the fusion feature tensor corresponding to the feature tensor. The feature fusion subnetwork further performs feature extraction and fusion on each feature tensor that is output by the backbone network, thereby improving accuracy of the entire image text extraction model.

In a possible implementation of the third aspect, the bounding box regression subnetwork is further used to obtain, based on a preset height value and a preset aspect ratio value, the first candidate box corresponding to the fusion feature tensor.

In a possible implementation of the third aspect, the classification subnetwork is further used to obtain, based on a preset height value and a preset aspect ratio value, the second candidate box corresponding to the fusion feature tensor. Shapes of the first candidate box and the second candidate box that are obtained according to the foregoing method more conform to a feature of a text area, thereby improving accuracy of the obtained text location information and text attribute information.

According to a fourth aspect, this application further provides an image text extraction model training apparatus. The apparatus includes an initialization module, an image text extraction model, a reverse excitation module, and a storage module, to implement the method according to the second aspect or any possible implementation of the second aspect.

According to a fourth aspect, this application further provides an image text extraction model training apparatus. The apparatus includes an initialization module, an image text extraction model, a reverse excitation module, and a storage module, to implement the method according to the second aspect or any possible implementation of the second aspect.

According to a fifth aspect, this application provides a computing device system. The computing device system includes at least one computing device. Each computing device includes a memory and a processor. The processor in the at least one computing device is configured to access code in the memory, to perform the method according to the first aspect or any possible implementation of the first aspect.

According to a sixth aspect, this application further provides a computing device system. The computing device system includes at least one computing device. Each computing device includes a memory and a processor. The processor in the at least one computing device is configured to access code in the memory, to perform the method according to the second aspect or any possible implementation of the second aspect.

According to a seventh aspect, this application provides a non-transitory readable storage medium. When the non-transitory readable storage medium is executed by a computing device, the computing device performs the method according to the first aspect or any possible implementation of the first aspect. The storage medium stores a program. The storage medium includes but is not limited to a volatile memory such as a random access memory, and a nonvolatile memory such as a flash memory, a hard disk drive (English: hard disk drive, HDD for short), or a solid-state drive (English: solid state drive, SSD for short).

According to an eighth aspect, this application further provides a non-transitory readable storage medium. When the non-transitory readable storage medium is executed by a computing device, the computing device performs the method according to the second aspect or any possible implementation of the second aspect. The storage medium stores a program. The storage medium includes but is not limited to a volatile memory such as a random access memory, and a nonvolatile memory such as a flash memory, a hard disk drive (English: hard disk drive, HDD for short), or a solid-state drive (English: solid state drive, SSD for short).

According to a ninth aspect, this application provides a computing device program product. The computing device program product includes a computer instruction, and when the computer instruction is executed by a computing device, the computing device performs the method according to the first aspect or any possible implementation of the first aspect. The computer program product may be a software installation package. When the method according to the first aspect or any possible implementation of the first aspect needs to be used, the computer program product may be downloaded and executed on the computing device.

According to a tenth aspect, this application further provides another computing device program product. The computing device program product includes a computer instruction, and when the computer instruction is executed by a computing device, the computing device performs the method according to the second aspect or any possible implementation of the second aspect. The computer program product may be a software installation package. When the method according to the second aspect or any possible implementation of the second aspect needs to be used, the computer program product may be downloaded and executed on the computing device.

### BRIEF DESCRIPTION OF DRAWINGS

To describe technical methods in the embodiments of this application more clearly, the following briefly describes the accompanying drawings used in the embodiments.
FIG. 1 is a schematic diagram of a system architecture according to an embodiment of this application;
FIG. 2 is a schematic diagram of another system architecture according to an embodiment of this application;
FIG. 3 is a schematic structural diagram of an image text extraction model according to an embodiment of this application;
FIG. 4 is a schematic diagram of outputting N feature tensors by a backbone network according to an embodiment of this application;
FIG. 5 is a schematic structural diagram of a feature fusion subnetwork according to an embodiment of this application;
FIG. 6 is a schematic diagram of an image text extraction model training procedure according to an embodiment of this application;
FIG. 7 is a schematic flowchart of a structured data extraction method according to an embodiment of this application;
FIG. 8 is a schematic diagram of an apparatus 300 according to an embodiment of this application;
FIG. 9 is a schematic diagram of another apparatus 400 according to an embodiment of this application;
FIG. 10 is a schematic diagram of a computing device 500 in a computing device system according to an embodiment of this application;
FIG. 11 is a schematic diagram of a computing device 600 in another computing device system according to an embodiment of this application; and
FIG. 12A and FIG. 12B are a schematic diagram of a computing device 700 in another computing device system according to an embodiment of this application.

### DESCRIPTION OF EMBODIMENTS

The following describes the solutions provided in the embodiments of this application with reference to the accompanying drawings in this application.

Letters such as "W", "H", "K", "L", and "N" in the embodiments of this application do not have a logical or size dependency relationship, and are merely used to describe a concept of "a plurality of" by using an example.

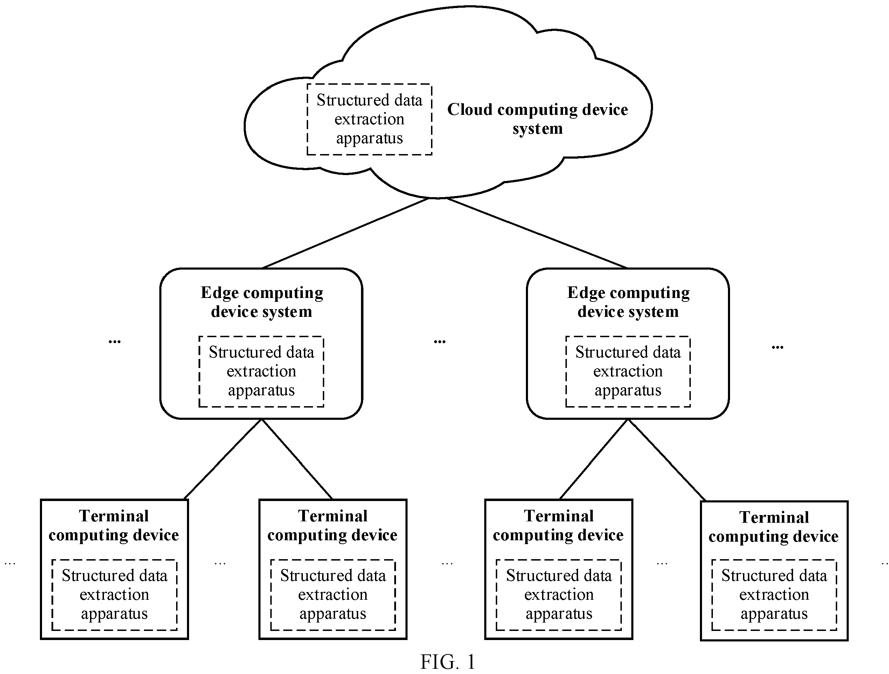

As shown in FIG. 1, a method for extracting structured data from an image provided in the embodiments of this application is performed by a structured data extraction apparatus. The structured data extraction apparatus may run in a cloud computing device system (including at least one cloud computing device such as a server), or may run in an edge computing device system (including at least one edge computing device such as a server or a desktop computer), or may run in various terminal computing devices such as a smartphone, a notebook computer, a tablet computer, a personal desktop computer, and an intelligent printer.

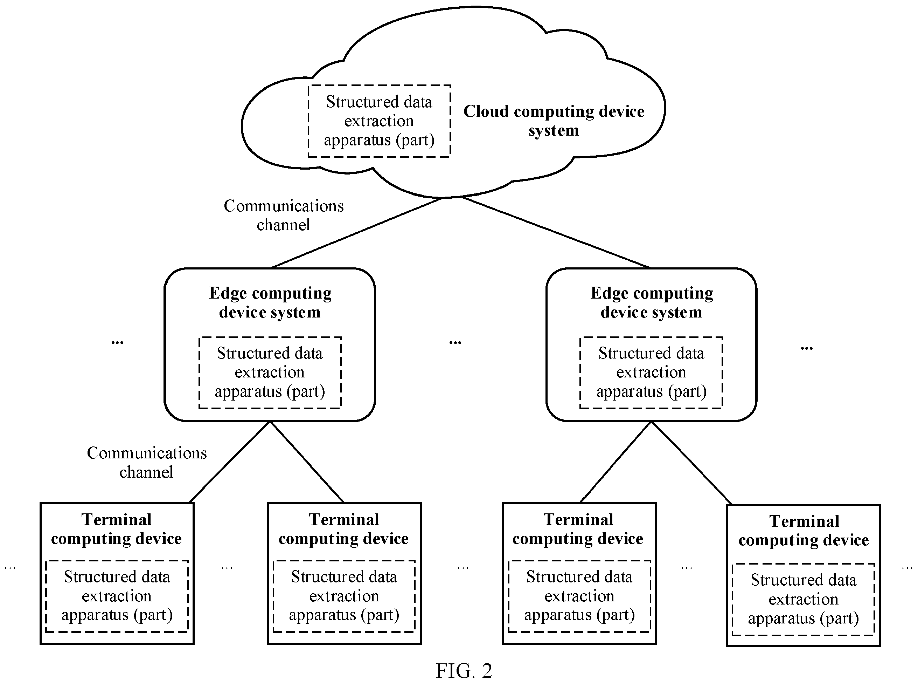

As shown in FIG. 2, the structured data extraction apparatus includes a plurality of parts (for example, the structured data extraction apparatus includes an initialization module, a storage module, an image text extraction model, and a text identification model). The parts of the apparatus may separately run in three environments: a cloud computing device system, an edge computing device system, or a terminal computing device, or may run in any two of the three environments (for example, some parts of the structured data extraction apparatus run in the cloud computing device system, and the other parts run in the terminal computing device). The cloud computing device system, the edge computing device system, and the terminal computing device are connected through a communications channel, and may mutually perform communication and data transmission. The structured data extraction method provided in the embodiments of this application is performed by a combination of the parts of the structured data extraction apparatus that run in the three environments (or any two of the three environments).

The structured data extraction apparatus works in two time states: a training state and an inference state. There is a time sequence relationship between the training state and the inference state, to be specific, the training state is prior to the inference state. In a training state, the structured data extraction apparatus trains the image text extraction model and the text identification model (or trains only the image text extraction model), and the trained image text extraction model and text identification model are used to infer an inference state. In an inference state, the structured data extraction apparatus performs an inference operation to extract structured data from a to-be-inferred image.

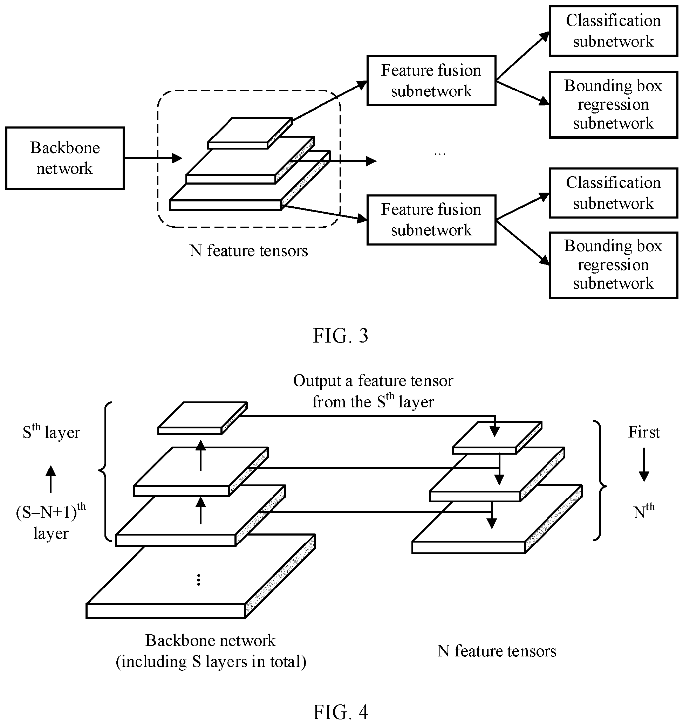

The following describes a structure of the image text extraction model. As shown in FIG. 3, the image text extraction model is a multi-class deep neural network, and includes a backbone network, at least one feature fusion subnetwork, at least one classification subnetwork, and at least one bounding box regression subnetwork.

The backbone network includes at least one convolutional layer and is used to extract a feature tensor from an input image. The feature tensor includes several values. The backbone network may use some existing model structures in the industry, such as a VGG, a Resnet, a Densenet, and a mobilenet. The convolutional layer in the backbone network includes several convolution kernels. Each convolution kernel includes several parameters. Different convolutional layers may include different quantities of convolution kernels. A quantity of convolution kernels included in each convolutional layer is used to determine a quantity of channels of a feature tensor that is output after a convolution operation is performed on the input image (or the feature tensor) and the convolution kernels in the convolutional layer. For example, after convolution is performed on a feature tensor with W*H*L (W represents a width of the feature tensor, H represents a height of the feature tensor, and L represents a quantity of channels of the feature tensor, where W, H, and L are all natural numbers greater than 0) and J 1*1 convolution kernels in a convolutional layer, the convolutional layer outputs a feature tensor with W*H*J (J is a natural number greater than 0). After the input image passes through the backbone network, one or more feature tensors may be output. As shown in FIG. 4, an example in which the Resnet is used as the backbone network is used. The Resnet totally has S (S is a natural number greater than 0) convolutional layers, and outputs N (N is a natural number greater than 0 and less than or equal to S) different sizes of feature tensors. The N feature tensors are obtained by performing top-down computation on feature tensors that are output from the (S-N+1)^{th} layer to the S^{th} layer in the backbone network. Specifically, the first feature tensor in the N feature tensors that are output by the backbone network is an output of the S^{th} layer in the backbone network, and the second feature tensor in the N feature tensors that are output by the backbone network is obtained by correspondingly adding two feature tensors: a feature tensor obtained by performing 1*1 convolution on a forward feature tensor that is output by the (S-1)^{th} layer in the backbone network, and a backward feature tensor obtained by performing upsampling on the first feature tensor. By analogy, the n^{th} feature tensor is obtained by correspondingly adding two feature tensors: a feature tensor obtained by performing 1*1 convolution on a forward feature tensor that is output by the (S-n+1)^{th} layer in the backbone network, and a backward feature tensor obtained by performing upsampling on the (n-1)^{th} feature tensor.

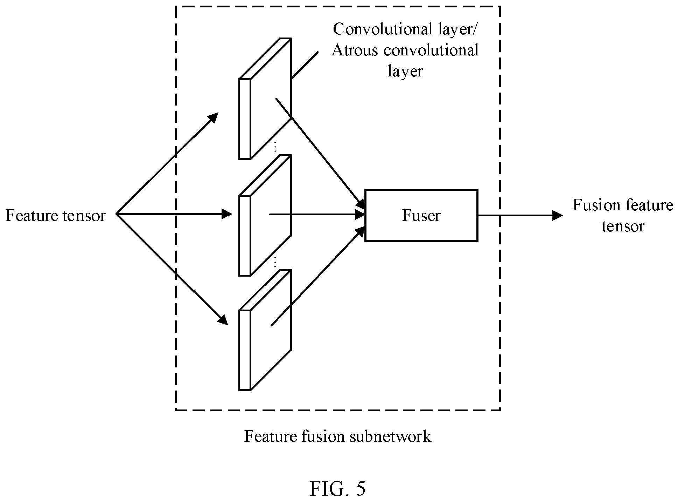

An input of each feature fusion subnetwork is one of the N feature tensors that are output by the backbone network. As shown in FIG. 5, the feature fusion subnetwork includes at least one parallel convolutional layer or atrous convolutional layer and one fuser. The at least one parallel convolutional layer or atrous convolutional layer may include different sizes but a same quantity of convolution kernels, and the parallel convolutional layers output a same size of feature tensors. The feature tensors that are output by the at least one parallel convolutional layer are input into the fuser to obtain a fused fusion feature tensor. The feature fusion subnetwork performs fusion after convolution is performed on each feature tensor that is output by the backbone network and the convolution kernels in the at least one convolutional layer, to better extract a corresponding feature from the input image. Then, each obtained fusion feature tensor is used as an input of a subsequent network in the image text extraction model. This can improve accuracy of extracting text location information and text attribute information from the image when the entire image text extraction model is in an inference state. For example, there may be three parallel convolutional layers in the feature fusion subnetwork, and 3 *3 convolution, 1 *5 convolution, and double 3 *3 atrous convolution are respectively performed on the convolutional layers, so that obtained three feature tensors can be fused into one fusion feature tensor in a corresponding addition manner.

An input of each classification subnetwork is a fusion feature tensor that is output by each feature fusion subnetwork. In the classification subnetwork, each feature point in the input fusion feature tensor (that is, a location corresponding to each value in the fusion feature tensor) corresponds to an area in the input image of the image text extraction model. Centered on a center of the area, there are candidate boxes with different aspect ratios and different area ratios. The classification subnetwork computes, by using a convolutional layer and a fully connected layer, a probability that a subimage in each candidate box belongs to a specific class.

An input of the bounding box regression subnetwork is also a fusion feature tensor that is output by the feature fusion subnetwork. In the bounding box regression subnetwork, each feature point in the input fusion feature tensor (that is, a location corresponding to each value in the fusion feature tensor) corresponds to an area in the input image of the image text extraction model. Centered on a center of the area, there are candidate boxes with different aspect ratios and different area ratios. The bounding box regression subnetwork computes, by using a convolutional layer and a fully connected layer, an offset between each candidate box and an annotated real box close to the input image.

For example, after the input image of the image text extraction model passes through the backbone network and the feature fusion subnetworks, a specific feature fusion subnetwork outputs a fusion feature tensor with W*H*L. After the classification subnetwork performs classification, W*H*K*A probability values are obtained (W is a width of the fusion feature tensor, H is a height of the fusion feature tensor, K is a quantity of classes for the classification by the classification subnetwork, and A is a quantity of candidate areas corresponding to feature points in the fusion feature tensor, where W, H, K, and A are all natural numbers greater than 0). After the bounding box regression subnetwork performs bounding box locating, W*H*4*A values are obtained (4 indicates four coordinate offsets corresponding to each candidate box and real box).

After the image text extraction model is trained in a training state, the image text extraction model in an inference state may output text location information and text attribute information in an image. The text location information and the text attribute information are used as an input of another module in the structured data extraction apparatus, to jointly extract structured data from the image.

In a training state, a training data set includes several training images. The training image includes at least one piece of structured data, and the training image is an image in which the at least one piece of structured data is annotated. In an inference state, an image from which structured data needs to be extracted includes at least one piece of structured data. The structured data includes text attribute information and text information. The text information includes a writing symbol used to record a specific object and simplify an image, and includes but is not limited to an Arabic numeral, a Chinese character, an English letter, a Greek letter, a punctuation, and the like. The text attribute information includes a type or a definition of corresponding text information. For example, when the text information includes a Chinese character or an English letter, the text attribute information may be a name, an address, or a gender. For another example, when the text information includes an Arabic numeral, the text attribute information may be an age or a birth date.

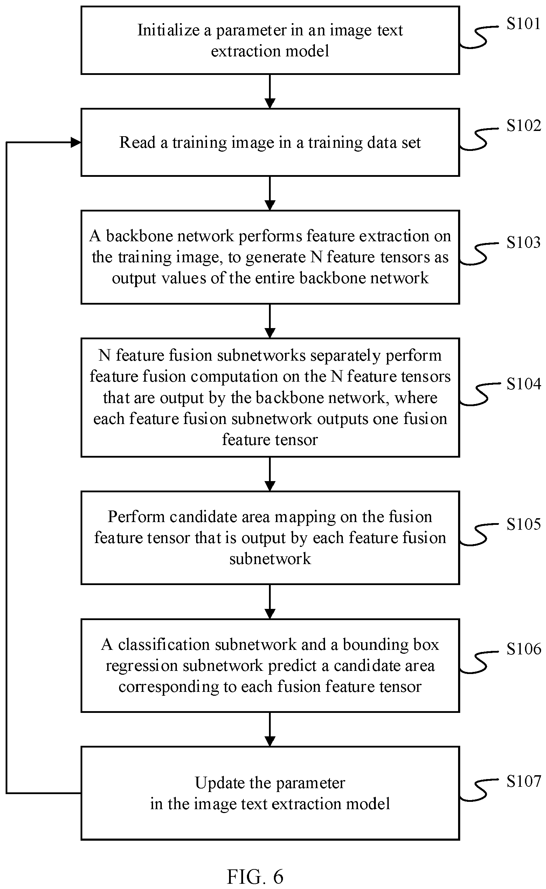

FIG. 6 shows an image text extraction model training procedure in a training state. The following specifically describes image text extraction model training steps with reference to FIG. 6.

S101: Initialize parameters in an image text extraction model, where the parameters include a parameter of each convolutional layer in a backbone network, a parameter of each convolutional layer in a feature fusion subnetwork, a parameter of each convolutional layer in a classification subnetwork, a parameter of each convolutional layer in a bounding box regression subnetwork, and the like.

S102: Read a training image in a training data set, where the training data set includes several training images, and some text areas in the training image are annotated by a box with attribute information. Therefore, not only a location of the text area but also an attribute is annotated in the training image. The training data set may vary with an application scenario of the image text extraction model, and the training data set is usually constructed manually. For example, when the image text extraction module is configured to extract structured information from a passport image, text information corresponding to a fixed attribute such as a name, a gender, a passport number, or an issue date in each passport is annotated by a box with a corresponding attribute. For example, a text area "Zhang San" is annotated by a box with a name attribute, and a text area "Male" is annotated by a box with a gender attribute.

S103: The backbone network performs feature extraction on the training image, to generate N feature tensors as output values of the entire backbone network. Each convolutional layer in the backbone network first performs a convolution operation on a feature tensor (or a training image) that is output by a previous layer, and then the (S-N+1)^{th} layer to the S^{th} layer in the backbone network (including S layers in total) separately perform top-down computation (from the S^{th} layer to the (S-N+1)^{th} layer) to obtain the first feature tensor to the N^{th} feature tensor. Specifically, the first feature tensor in the N feature tensors that are output by the backbone network is an output of the S^{th} layer in the backbone network, and the second feature tensor in the N feature tensors that are output by the backbone network is obtained by correspondingly adding two feature tensors: a feature tensor obtained by performing 1*1 convolution on a forward feature tensor that is output by the (S-1)^{th} layer in the backbone network, and a backward feature tensor obtained by performing upsampling on the first feature tensor. By analogy, the n^{th} feature tensor is obtained by correspondingly adding two feature tensors: a feature tensor obtained by performing 1*1 convolution on a forward feature tensor that is output by the (S-n+1)^{th} layer in the backbone network, and a backward feature tensor obtained by performing upsampling on the (n-1)^{th} feature tensor.

S104: N feature fusion subnetworks separately perform feature fusion computation on the N feature tensors that are output by the backbone network, where each feature fusion subnetwork outputs one fusion feature tensor.

S105: Perform candidate area mapping on the fusion feature tensor that is output by each feature fusion subnetwork. Each fusion feature tensor includes several feature points. Each value corresponds to one area in the input image. Centered on the area in the input image, a plurality of candidate boxes with different aspect ratios and different size ratios are generated. A candidate box generation method is as follows: Cross multiplication combination is performed on a group of preset height values G (G = [g1, g2, ..., gi], where g ≥ 0, and i is a natural number greater than 0) and a group of preset aspect ratio values R (R = [r1, r2, ..., rj], where r ≥ 0, and j is a natural number greater than 0), to obtain a group of width values M (M = [g1*r1, g2*r2, ..., gi*rj]). There are i*j width values M. A group of candidate boxes with different aspect ratios and size ratios are obtained based on the obtained group of width values M and a height value corresponding to each of the width values M. Sizes of the candidate boxes are A (A = [(g1*r1, g1), (g2*r2, g2), ..., (gi*rj, gj)]). There are i*j candidate boxes corresponding to each feature point in each fusion feature tensor. Each feature point in each fusion feature tensor is traversed to obtain all candidate boxes. Each candidate box corresponds to one candidate area in the training image, and the candidate area is a subimage in the training image.

Optionally, according to the candidate box generation method, a group of fixed height values of candidate boxes are preset, and a group of aspect ratio values including relatively large aspect ratio values are preset, so that an aspect ratio of a generated candidate box can more conform to a feature of a text area (there are a relatively large quantity of areas with a relatively large aspect ratio), thereby improving accuracy of the image text extraction model. For example, if a group of preset height values are G = [4, 6, 8], and a group of preset aspect ratio values are R = [1, 5, 10, 30], 12 candidate boxes with different aspect ratios and different size ratios are generated, where the 12 candidate boxes include bar candidate boxes whose widths and heights are (120, 4), (180, 6), (240, 8), and the like, which conform to a shape feature of a text area that may exist in an image.

S106: Each classification subnetwork and each bounding box regression subnetwork predict a candidate area corresponding to each fusion feature tensor. Each classification subnetwork classifies the candidate area corresponding to each fusion feature tensor in the N fusion feature tensors, to obtain a text attribute prediction result of the candidate area, and computes a difference between the text attribute prediction result and a real text attribute annotation by comparing the text attribute prediction result with the annotated training image, to obtain a text attribute loss function value. The bounding box regression subnetwork predicts a location of a candidate area corresponding to each fusion feature tensor in the N fusion feature tensors, to obtain a text location prediction result, and computes a difference between the text location prediction result and a real text location annotation, to obtain a text location loss function value.

S107: Update (that is, reversely excite) the parameters in the image text extraction model based on the text attribute loss function value and the text location loss function value, where the parameters in the image text extraction model include the parameter of each convolutional layer in the backbone network, the parameter of each layer in the feature fusion subnetwork, the parameter of each layer in the classification subnetwork, the parameter of each layer in the bounding box regression subnetwork, and the like.

Step S102 to step S107 are repeatedly performed, so that the parameters in the image text extraction model are continuously updated. Until a trend of the text attribute loss function value and a trend of the text location loss function value converge, the text attribute loss function value is less than a preset first threshold, and the text location loss function value is less than a preset second threshold, the training of the image text extraction model is completed. Alternatively, until the training image in the training data set is read completely, the training of the image text extraction model is completed.

In this embodiment of this application, a text identification model is configured to perform text identification on a text subimage. The text identification model may be a deep neural network, a pattern matching model, or the like. The text identification model may use some existing model structures in the industry, for example, a Seq2Seq model and a Tensorflow model based on an attention mechanism. According to the method for extracting structured data from an image provided in this application, the text identification model may directly use a model structure that has been trained in the industry; or the text identification model is trained based on different application requirements by using different training data sets, so that identification accuracy of the text identification model is stable and relatively high in a specific application. For example, in a method for extracting structured data from a Chinese passport image, a text in a text training image in a training data set of a text identification model includes a Chinese character, an Arabic numeral, and an English letter, and training of the text identification model is also completed in a training state.

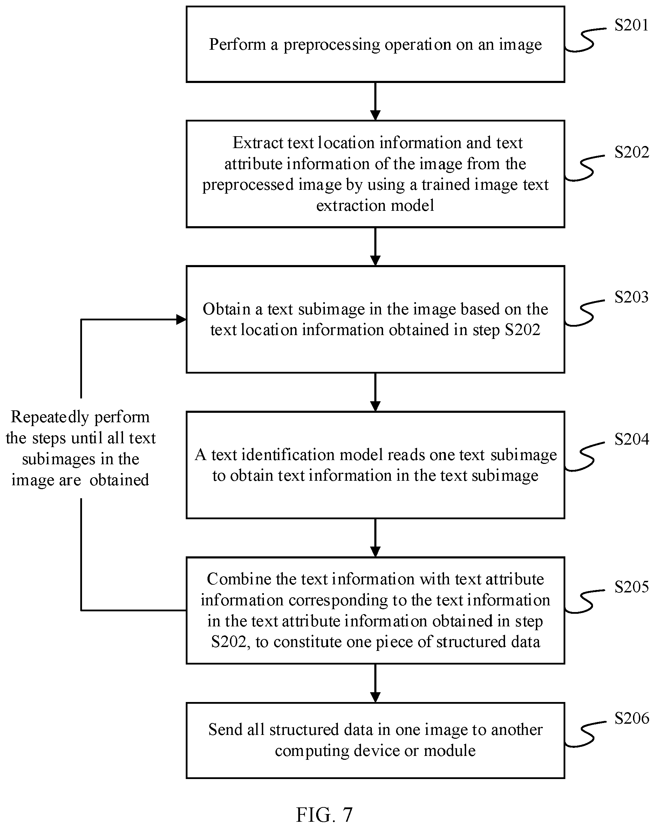

In an inference state, the trained image text extraction model and text identification model are configured to extract structured data from an image. FIG. 7 shows a structured data extraction procedure. The following specifically describes structured data extraction steps with reference to FIG. 7.

S201: Perform a preprocessing operation on the image, where the preprocessing operation includes, for example, image contour extraction, rotation correction, noise reduction, or image enhancement. When the preprocessed image is used for a subsequent operation, structured data extraction accuracy may be improved. A specific preprocessing operation method may be selected based on an application scenario of the structured data extraction method (one or more preprocessing operations may be selected). For example, to extract structured information of a passport scanning image, because image content skew and a relatively large quantity of noises usually exist in the scanning image, for preprocessing operation selection, rotation correction (for example, affine transformation) may be first performed on the image, and then noise reduction (for example, Gaussian low-pass filtering) is performed on the image.

S202: Extract text location information and text attribute information from the preprocessed image by using a trained image text extraction model, where the preprocessed image is used as an input of the image text extraction model. After performing inference, the image text extraction model outputs at least one piece of text location information and at least one piece of text attribute information of the image, where the text location information and the text attribute information are in a one-to-one correspondence.

Specifically, a first information set and a second information set are obtained from the preprocessed image by using the image text extraction model. The image includes at least one piece of structured data.

The first information set includes at least one piece of first information, and the second information set includes at least one piece of second information. The at least one piece of first information indicates text location information, and the text location information indicates a location of the at least one text subimage in a text area in the image. For example, a boundary of the text subimage in the text area in the image is a rectangle, and a text location is coordinates of four intersection points of four lines of the rectangle.

The at least one piece of second information indicates text attribute information, and the text attribute information indicates an attribute of a text in the at least one text subimage.

For example, to extract structured data from a passport image, and text areas with four attributes including a name, a gender, a passport number, and an issue date are annotated in the training passport image for training the image text extraction model. In this case, when the trained image text extraction model performs inference, the output text attribute information includes the foregoing four types of text attributes.

An amount of text location information is equal to an amount of text attribute information, and the text location information is in a one-to-one correspondence with the text attribute information. To be specific, first text location information in a text location information set corresponds to first text attribute information in a text attribute information set, and second text location information in the text location information set corresponds to second text attribute information in the text attribute information set.

After inference is performed by the image text extraction model on the preprocessed image, both the text attribute information and the text location information in the image are obtained. This fully improves efficiency of the solution for extracting structured data from an image, and reduces computing resources. In addition, the image text extraction model ensures accuracy of extracting text location information and text attribute information, so that structured data extraction accuracy can be further ensured.

S203: Obtain the at least one text subimage in the image based on the text location information obtained in step S202. Based on the text location information, a corresponding area is located in the image, the corresponding area is captured by using a capturing technology, to constitute a text subimage, and the text subimage is stored. One image may include a plurality of text subimages, and a quantity of text subimages is equal to a quantity of text locations in the text location information.

S204: The text identification model reads one text subimage to obtain text information in the text subimage, where the text subimage is used as an input of the text identification model. The text identification model performs feature tensor extraction and text identification on the text subimage, to obtain a computer-readable text to which the text subimage is converted. The text identification model outputs text information in the text subimage.

S205: Combine the text information in step S204 with the text attribute information obtained in step S202 to constitute one piece of structured data. Specifically, the text attribute information corresponding to the text location information is determined based on the text location information of the text subimage including the text information in the image, and the text information is combined with the determined text attribute information. For example, the text information and the determined text attribute information are written into one row but two adjacent columns in a table, to constitute one piece of structured data.

Step S203 to step S205 are repeatedly performed, until all text subimages in one image are identified by the text identification model and identified text information and corresponding text attribute information constitute structured data.

Optionally, step S204 may not necessarily be performed after step S203, and step S204 may be performed immediately after a text subimage is obtained in step S203, thereby improving overall structured data extraction efficiency.

S206: Send all structured data in one image to another computing device or module, where all the extracted structured data in the image may be directly used by the another computing device or module, or may be stored in a storage module as data information that may be used in the future.

A task of extracting structured data from one image is completed by performing step S201 to step S206. When structured data needs to be extracted from a plurality of images, step S201 to step S206 are repeatedly performed.

In the solution of extracting structured data from an image provided in this embodiment of this application, one piece of structured data may be obtained by combining a text attribute that is output by the image text extraction model with text information that is output by the text identification model, without a need of introducing a new structured data extraction model. This greatly improves structured data extraction efficiency, reduces computing resources, prevents structured data extraction accuracy from being affected by a plurality of models, and improves accuracy of extracting structured data from an image.

Optionally, after the structured data is extracted from the image, error correction post-processing may be performed, to further improve structured data extraction accuracy. The error correction post-processing operation may be implemented by performing mutual verification based on a correlation between extracted structured data. For example, after structured data is extracted from a medical document, the structured data extraction accuracy may be determined by verifying whether a total amount of the extracted structured data is equal to a sum of all amounts.

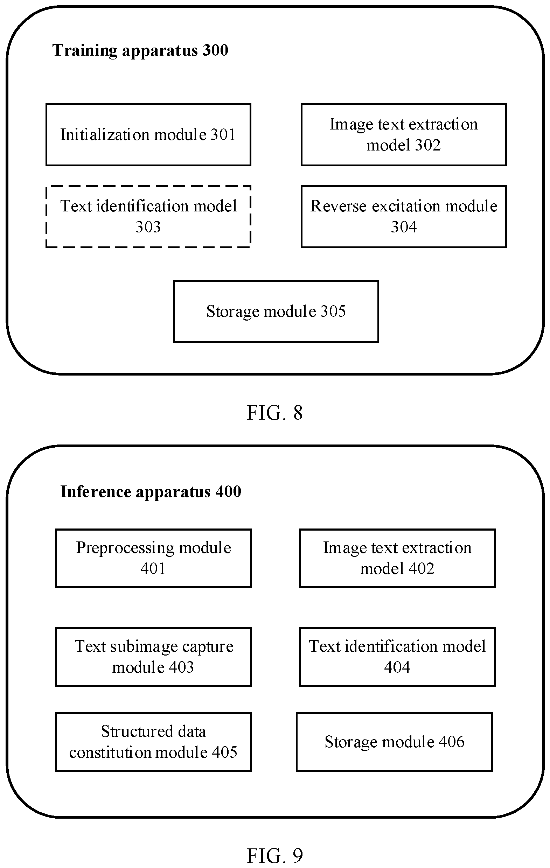

As shown in FIG. 8, an embodiment of this application provides a training apparatus 300. The training apparatus 300 includes an initialization module 301, an image text extraction model 302, a text identification model 303, a reverse excitation module 304, and a storage module 305. Optionally, the training apparatus 300 may not include the text identification model 303. The training apparatus 300 trains the image text extraction model and the text identification model. Optionally, the training apparatus 300 may not train the text identification model. The foregoing modules (or models) may be software modules.

Specifically, in the training apparatus 300, the modules (or models) are connected to each other through a communications channel. The initialization module 301 performs step S101 to initialize a parameter of the image text extraction model. The image text extraction model 302 reads a training image from the storage module 305 to perform step S 102 to step S105. The reverse excitation module 304 performs step S106. Optionally, the initialization module 301 further initializes a parameter of the text identification model. The text identification model reads the training text image from the storage module 305 to perform a model training operation. The reverse excitation module 304 performs reverse excitation on the parameter of the text identification model. In this way, the model parameters are updated.

As shown in FIG. 9, this application further provides an inference apparatus 400. The apparatus includes a preprocessing module 401, an image text extraction model 402, a text subimage capture module 403, a text identification model 404, a structured data constitution module 405, and a storage module 406. The foregoing modules (or models) may be software modules. Specifically, the modules (or models) are connected to each other through a communications channel. The preprocessing module 401 reads an image from the storage module 406 to perform step S201. The image text extraction model 402 performs step S202 to generate text location information and text attribute information. The text subimage capture module 403 receives the text location information transmitted from the image text extraction model 402, to perform step S203, and stores an obtained text subimage in the storage module 406. The text identification model 404 reads one text subimage from the storage module 406, to perform step S204. The structured data constitution module 405 receives the text location information transmitted from the image text extraction model 402, and receives text information transmitted from the text identification model 404, to perform step S205 to step S206.

The training apparatus 300 and the inference apparatus 400 may be combined as a service of extracting structured data from an image and then provided for a user. For example, the training apparatus 300 (or a part of the training apparatus 300) is deployed in a cloud computing device system, the user uploads a preset initialization parameter and a prepared training data set to the cloud computing device system by using an edge computing device, and stores the preset initialization parameter and the prepared training data set in the storage module 305 in the training apparatus 300, and the training apparatus 300 trains the image text extraction model. Optionally, the user uploads the preset initialization parameter and the prepared training text image set to the cloud computing device system by using the edge computing device, and stores the preset initialization parameter and the prepared training text image set in the storage module 305 in the training apparatus 300, and the training apparatus 300 trains the text identification model. The image text extraction model 302 and the text identification model 303 that are trained by the training apparatus 300 are used as the image text extraction model 402 and the text identification model 404 in the inference apparatus 400. Optionally, the text identification model 404 in the inference apparatus 400 may not be obtained from the training apparatus 300, and the text identification model 404 may be obtained from a trained open-source model library in the industry or purchased from a third party. The inference apparatus 400 extracts structured data from an image. For example, the inference apparatus 400 (or a part of the inference apparatus 400) is deployed in the cloud computing device system, the user sends, to the inference apparatus 400 in the cloud computing device system by using a terminal device, an image from which structured data needs to be extracted, and the inference apparatus 400 performs an inference operation on the image and extracts the structured data from the image. Optionally, the extracted structured data is stored in the storage module 406, and the user may download the extracted structured data from the storage module 406. Optionally, the inference apparatus 400 may send the extracted structured data to the user in real time through a network.

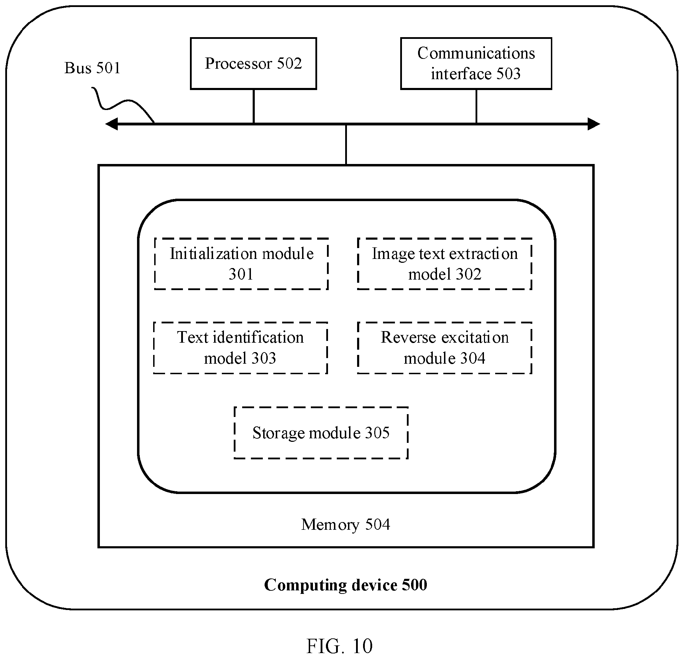

As shown in FIG. 2, each part of the training apparatus 300 and each part of the inference apparatus 400 may be executed on a plurality of computing devices in different environments (when the training apparatus 300 and the inference apparatus 400 are combined into a structured data extraction apparatus). Therefore, this application further provides a computing device system. The computing device system includes at least one computing device 500 shown in FIG. 10. The computing device 500 includes a bus 501, a processor 502, a communications interface 503, and a memory 504. The processor 502, the memory 504, and the communications interface 503 communicate with each other through the bus 501.

The processor may be a central processing unit (English: central processing unit, CPU for short). The memory may include a volatile memory (English: volatile memory), for example, a random access memory (English: random access memory, RAM for short). The memory may alternatively include a nonvolatile memory (English: nonvolatile memory), for example, a read-only memory (English: read-only memory, ROM for short), a flash memory, an HDD, or an SSD. The memory stores executable code, and the processor executes the executable code to perform the foregoing structured data extraction method. The memory may further include a software module required by another running process such as an operating system. The operating system may be LINUX^{™}, UNIX^{™}, WINDOWS^{™}, or the like.

Specifically, the memory 504 stores any one or more modules or models in the foregoing apparatus 300. The memory 504 may further store an initialization parameter, a training data set, and the like of an image text extraction model and a text identification model. In addition to storing any one or more of the foregoing modules or models, the memory 504 may further include a software module required by another running process such as an operating system. The operating system may be LINUX^{™}, UNIX^{™}, WINDOWS^{™}, or the like.

The at least one computing device 500 in the computing device system establishes communication with each other through a communications network, and any one or more modules in the apparatus 300 run on each computing device. The at least one computing device 500 jointly performs trains the image text extraction model and the text identification model.

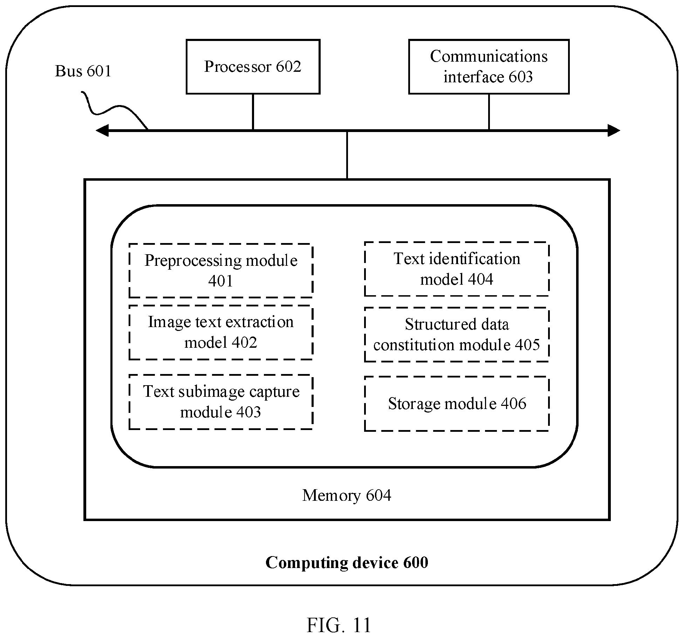

This application further provides another computing device system. The computing device system includes at least one computing device 600 shown in FIG. 11. The computing device 600 includes a bus 601, a processor 602, a communications interface 603, and a memory 604. The processor 602, the memory 604, and the communications interface 603 communicate with each other through the bus 601.

The processor may be a central processing unit (English: central processing unit, CPU for short). The memory may include a volatile memory (English: volatile memory), for example, a random access memory (English: random access memory, RAM for short). The memory may alternatively include a nonvolatile memory (English: nonvolatile memory), for example, a read-only memory (English: read-only memory, ROM for short), a flash memory, an HDD, or an SSD. The memory stores executable code, and the processor executes the executable code to perform the foregoing structured data extraction method. The memory may further include a software module required by another running process such as an operating system. The operating system may be LINUX^{™}, UNIX^{™}, WINDOWS^{™}, or the like.

Specifically, the memory 604 stores any one or more modules or models in the foregoing apparatus 400. The memory 604 may further store an image set from which structured data needs to be extracted, and the like. In addition to storing any one or more of the foregoing modules or models, the memory 604 may further include a software module required by another running process such as an operating system. The operating system may be LINUX^{™}, UNIX^{™}, WINDOWS^{™}, or the like.

The at least one computing device 600 in the computing device system establishes communication with each other through a communications network, and any one or more modules in the apparatus 400 run on each computing device. The at least one computing device 600 jointly performs the foregoing structured data extraction operation.

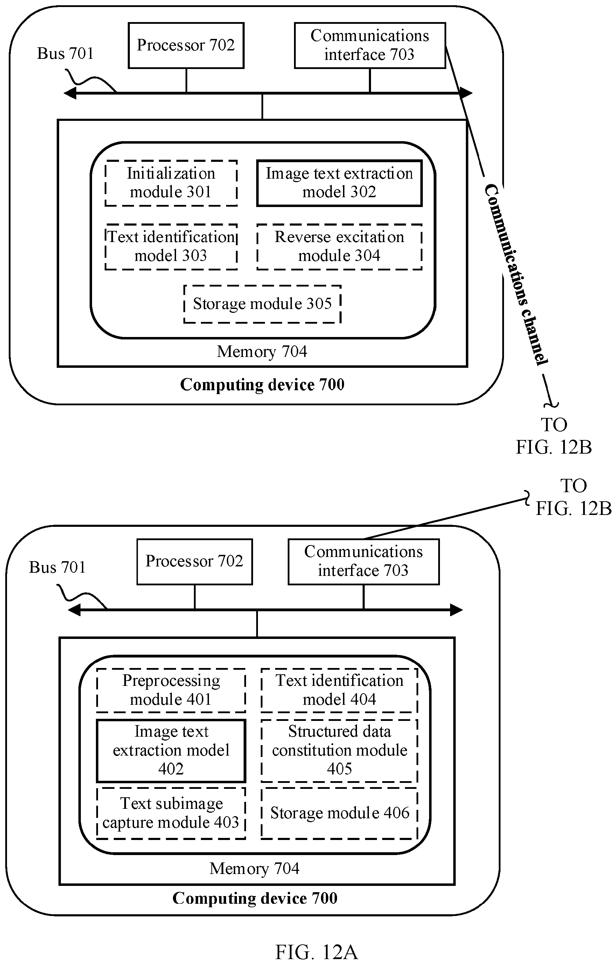

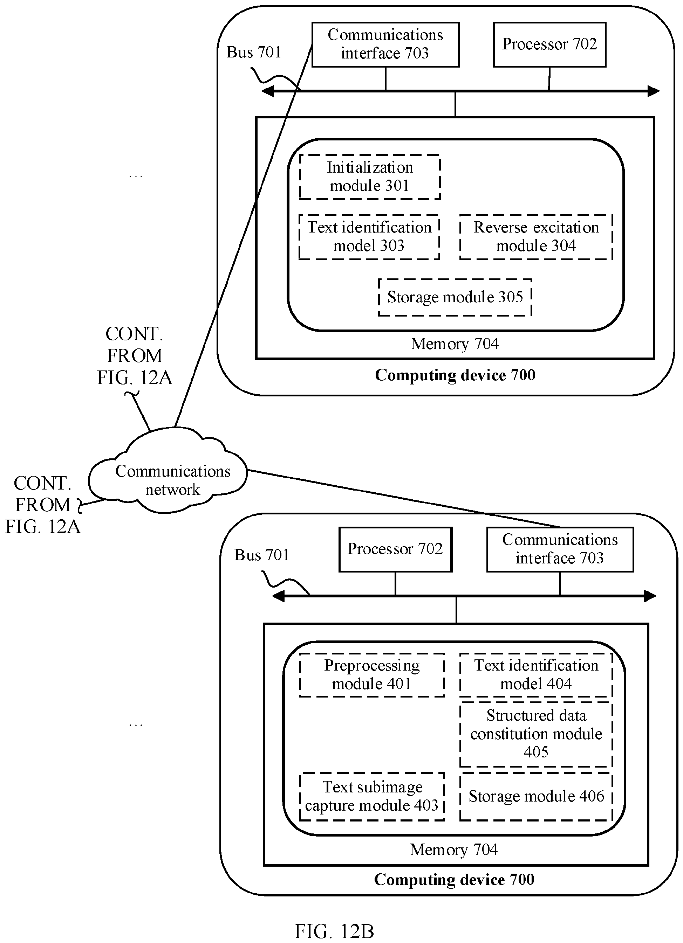

This application further provides a computing device system. The computing device system includes at least one computing device 700 shown in FIG. 12A and FIG. 12B. The computing device 700 includes a bus 701, a processor 702, a communications interface 703, and a memory 704. The processor 702, the memory 704, and the communications interface 703 communicate with each other through the bus 701.

The memory 704 in the at least one computing device 700 stores all modules or any one or more modules in the training apparatus 300 and the inference apparatus 400, and the processor 702 executes the modules stored in the memory 704.

In the computing device system, after the at least one computing device 700 that executes all modules or any one or more modules in the training apparatus 300 trains an image text extraction model (may optionally train a text identification model), the trained image text extraction model (optionally, the trained text identification model) is stored in a readable storage medium of the computing device 700 as a computer program product. Then, the computing device 700 that stores the computer program product sends the computer program product to the at least one computing device 700 in the computing device system through a communications channel, or provides the computer program product for the at least one computing device 700 in the computing device system by using the readable storage medium. The at least one computing device 700 that receives the trained image text extraction model (and the trained text identification model) and the computing device 700 that stores any one or more modules in the inference apparatus 400 in the computing device system jointly perform an image inference operation and structured data extraction.

Optionally, the computing device 700 that stores the trained image text extraction model (and the trained text identification model) and the computing device 700 that stores any one or more modules in the inference apparatus 400 in the computing device system jointly perform an image inference operation and structured data extraction.

Optionally, the computing device 700 that stores the trained image text extraction model (and the trained text identification model) and any one or more modules in the inference apparatus 400 that are stored in the memory 704 of the computing device 700 jointly perform an image inference operation and structured data extraction.

Optionally, the at least one computing device 700 that receives the trained image text extraction model (and the trained text identification model) and any one or more modules in the inference apparatus 400 that are stored in the memory 704 of the at least one computing device 700 jointly perform an image inference operation and structured data extraction.

Descriptions of procedures corresponding to the foregoing accompanying drawings have respective focuses. For a part that is not described in detail in a procedure, refer to related descriptions of another procedure.

All or some of the foregoing embodiments may be implemented by using software, hardware, firmware, or any combination thereof. When the software is used to implement the embodiments, all or some of the embodiments may be implemented in a form of a computer program product. A computer program product for model training includes one or more model training computer instructions. When the model training computer program instructions are loaded and executed on a computer, all or some of procedures or functions in a training state of the image text extraction model (and the text identification model) according to the embodiments of the present invention are generated. The computer program product for model training generates the trained image text extraction model (and the trained text identification model), the model may be used in a computer program product for image inference, and the computer program product for image inference includes one or more image inference computer instructions. When the image inference computer program instructions are loaded and executed on a computer, all or some of procedures or functions in an inference state according to the embodiments of the present invention are generated.

The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium includes a readable storage medium storing a model training computer program instruction and a readable storage medium storing an image inference computer program instruction. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium (for example, an SSD).

## Claims

1. A method for extracting structured data from an image, comprising:
obtaining (S202) a first information set and a second information set in the image by using a multi-class deep neural network based image text extraction model, wherein the image comprises at least one piece of structured data;
obtaining (S203) at least one text subimage in the image based on at least one piece of first information comprised in the first information set;
identifying (S204) text information in the at least one text subimage; and
obtaining (S205) at least one piece of structured data in the image based on the text information in the at least one text subimage and at least one piece of second information comprised in the second information set, wherein
the at least one piece of first information indicates text location information, and the text location information indicates a location of the at least one text subimage in the image;
the at least one piece of second information indicates text attribute information, and the text attribute information indicates an attribute of the text information in the at least one text subimage; and
each piece of structured data comprises the text attribute information and the text information.

2. The method according to claim 1, wherein the multi-class deep neural network based image text extraction model comprises a backbone network, at least one feature fusion subnetwork, at least one classification subnetwork, and at least one bounding box regression subnetwork; and
the obtaining a first information set and a second information set in the image by using a multi-class deep neural network based image text extraction model comprises:
inputting the image into the backbone network, and performing feature extraction on the image and outputting at least one feature tensor through the backbone network;
inputting each feature tensor that is output by the backbone network into a feature fusion subnetwork, and obtaining, through the feature fusion subnetwork, a fusion feature tensor corresponding to the feature tensor;
inputting the fusion feature tensor into a classification subnetwork and a bounding box regression subnetwork;
locating, by the bounding box regression subnetwork, the at least one text subimage in the image based on a first candidate box corresponding to the fusion feature tensor, to obtain the at least one piece of first information; and
classifying, by the classification subnetwork, a text attribute in the image based on a second candidate box corresponding to the fusion feature tensor, to obtain the at least one piece of second information.

3. The method according to claim 2, wherein each feature fusion subnetwork comprises at least one parallel convolutional layer and a fuser; and
the inputting each feature tensor that is output by the backbone network into a feature fusion subnetwork, and obtaining, through the feature fusion subnetwork, a fusion feature tensor corresponding to the feature tensor comprises:
inputting the feature tensor that is output by the backbone network into each of the at least one parallel convolutional layer;
inputting an output of each of the at least one parallel convolutional layer into the fuser; and
fusing, by the fuser, the output of each of the at least one parallel convolutional layer, and outputting the fusion feature tensor corresponding to the feature tensor.

4. The method according to claim 2 or 3, wherein the method further comprises:
obtaining, based on a preset height value and a preset aspect ratio value, the first candidate box corresponding to the fusion feature tensor.

5. The method according to claim 2 or 3, wherein the method further comprises:
obtaining, based on a preset height value and a preset aspect ratio value, the second candidate box corresponding to the fusion feature tensor.

6. An apparatus (400) for extracting structured data from an image, comprising:
a multi-class deep neural network based image text extraction model (402), configured to obtain a first information set and a second information set in the image, wherein the image comprises at least one piece of structured data;
a text subimage capture module (403), configured to obtain at least one text subimage in the image based on at least one piece of first information comprised in the first information set;
a text identification model (404), configured to identify text information in the at least one text subimage; and
a structured data constitution module (405), configured to obtain at least one piece of structured data in the image based on the text information in the at least one text subimage and at least one piece of second information comprised in the second information set,
wherein the at least one piece of first information indicates text location information, and the text location information indicates a location of the at least one text subimage in the image;
the at least one piece of second information indicates text attribute information, and the text attribute information indicates an attribute of the text information in the at least one text subimage; and
each piece of structured data comprises the text attribute information and the text information.

7. The apparatus (400) according to claim 6, wherein
the multi-class deep neural network based image text extraction model (402) comprises a backbone network, at least one feature fusion subnetwork, at least one classification subnetwork, and at least one bounding box regression subnetwork; and
the multi-class deep neural network based image text extraction model (402) is configured to: input the image into the backbone network, wherein the backbone network is used to perform feature extraction on the image and output at least one feature tensor; input each feature tensor that is output by the backbone network into a feature fusion subnetwork, wherein the feature fusion subnetwork is used to obtain a fusion feature tensor corresponding to the feature tensor; and input the fusion feature tensor into a classification subnetwork and a bounding box regression subnetwork, wherein
the bounding box regression subnetwork is used to locate the at least one text subimage in the image based on a first candidate box corresponding to the fusion feature tensor, to obtain the at least one piece of first information; and
the classification subnetwork is used to classify a text attribute in the image based on a second candidate box corresponding to the fusion feature tensor, to obtain the at least one piece of second information.

8. The apparatus (400) according to claim 7, wherein each feature fusion subnetwork comprises at least one parallel convolutional layer and a fuser; and
the feature fusion subnetwork is used to input the feature tensor that is output by the backbone network into each of the at least one parallel convolutional layer, and input an output of each of the at least one parallel convolutional layer into the fuser; and the fuser is configured to fuse the output of each of the at least one parallel convolutional layer, and output the fusion feature tensor corresponding to the feature tensor.

9. The apparatus (400) according to claim 7 or 8, wherein the bounding box regression subnetwork is further used to obtain, based on a preset height value and a preset aspect ratio value, the first candidate box corresponding to the fusion feature tensor.

10. The apparatus (400) according to claim 7 or 8, wherein the classification subnetwork is further used to obtain, based on a preset height value and a preset aspect ratio value, the second candidate box corresponding to the fusion feature tensor.

11. A computing device system, comprising at least one memory and at least one processor, and the at least one memory is configured to store a computer instruction; and
the at least one processor executes the computer instruction to perform the method according to any one of claims 1 to 5.

12. A non-transitory readable storage medium, wherein when the non-transitory readable storage medium is executed by a computing device, the computing device performs the method according to any one of claims 1 to 5.

13. A computer program product, wherein when the computer program product is executed by a computing device, the computing device performs the method according to any one of claims 1 to 5.

## Patentansprüche

1. Verfahren zum Extrahieren von strukturierten Daten aus einem Bild, umfassend:
Erhalten (S202) einer ersten Informationsmenge und einer zweiten Informationsmenge in dem Bild durch Verwendung eines Bildtext-Extraktionsmodells auf der Basis eines tiefen neuronalen Netzes mehrerer Klassen, wobei das Bild mindestens ein Element strukturierter Daten umfasst;
Erhalten (S203) mindestens eines Textteilbildes in dem Bild auf der Basis mindestens eines in der ersten Informationsmenge enthaltenen Elements erster Informationen,
Identifizieren (S204) von Textinformationen in dem mindestens einen Textteilbild; und
Erhalten (S 205) mindestens eines Elements strukturierter Daten in dem Bild auf der Basis der Textinformationen in dem mindestens einen Textteilbild und mindestens eines in der zweiten Informationsmenge enthaltenen Elements zweiter Informationen,
wobei
das mindestens eine Element erste Informationen Textortsinformationen angibt und die Textortsinformationen einen Ort des mindestens einen Textteilbildes in dem Bild angeben;
das mindestens eine Element zweiter Informationen Textattributinformationen angibt und die Textattributinformationen ein Attribut der Textinformationen in dem mindestens einen Textteilbild angeben; und
jedes Element strukturierter Daten die Textattributinformationen und die Textinformationen umfasst.

2. Verfahren nach Anspruch 1, wobei das Bildtext-Extraktionsmodell auf der Basis eines tiefen neuronalen Netzes mehrerer Klassen ein Backbone-Netz, mindestens ein Merkmalsfusions-Teilnetz, mindestens ein Klassifikations-Teilnetz und mindestens ein Umrandungskasten-Regressionsteilnetz umfasst; und
das Erhalten einer ersten Informationsmenge und einer zweiten Informationsmenge in dem Bild durch Verwendung eines Bildtext-Extraktionsmodells auf der Basis eines tiefen neuronalen Netzes mehrerer Klassen Folgendes umfasst:
Eingeben des Bildes in das Backbone-Netz und Ausführen von Merkmalsextraktion an dem Bild und Ausgeben mindestens eines Merkmalstensors mittels des Backbone-Netzes;
Eingeben jedes Merkmalstensors, der durch das Backbone-Netz ausgegeben wird, in ein Merkmalsfusions-Teilnetz und Erhalten eines dem Merkmalstensor entsprechenden Fusions-Merkmalstensors mittels des Merkmalsfusions-Teilnetzes;
Eingeben des Fusions-Merkmalstensors in ein Klassifikations-Teilnetz und ein Umrandungskasten-Regressionsteilnetz;
Lokalisieren des mindestens einen Textteilbildes in dem Bild durch das Umrandungskasten-Regressionsteilnetz auf der Basis eines dem Fusions-Merkmalstensor entsprechenden ersten Kandidatenkastens, um das mindestens eine Element erster Informationen zu erhalten; und
Klassifizieren eines Textattributs in dem Bild durch das Klassifikations-Teilnetz auf der Basis eines dem Fusions-Merkmalstensor entsprechenden zweiten Kandidatenkastens, um das mindestens eine Element zweiter Informationen zu erhalten.

3. Verfahren nach Anspruch 2, wobei jedes Merkmalsfusions-Teilnetz mindestens eine parallele Faltungsschicht und einen Fusionierer umfasst; und
das Eingeben jedes Merkmalstensors, der durch das Backbone-Netz ausgegeben wird, in ein Merkmalsfusions-Teilnetz und Erhalten eines dem Merkmalstensor entsprechenden Fusions-Merkmalstensors mittels des Merkmalsfusions-Teilnetzes Folgendes umfasst:
Eingeben des Merkmalstensors, der durch das Backbone-Netz ausgegeben wird, in jeder der mindestens einen parallelen Faltungsschicht;
Eingeben einer Ausgabe jeder der mindestens einen parallelen Faltungsschicht in den Fusionierer; und
Fusionieren der Ausgabe jeder der mindestens einen parallelen Faltungsschicht durch den Fusionierer und Ausgeben des dem Merkmalstensor entsprechenden Fusions-Merkmalstensors.

4. Verfahren nach Anspruch 2 oder 3, wobei das Verfahren ferner Folgendes umfasst: Erhalten des dem Fusions-Merkmalstensor entsprechenden ersten Kandidatenkastens auf der Basis eines voreingestellten Höhenwerts und eines voreingestellten Seitenverhältniswerts.

5. Verfahren nach Anspruch 2 oder 3, wobei das Verfahren ferner Folgendes umfasst: Erhalten des dem Fusions-Merkmalstensor entsprechenden zweiten Kandidatenkastens auf der Basis eines voreingestellten Höhenwerts und eines voreingestellten Seitenverhältniswerts.

6. Vorrichtung (400) zum Extrahieren strukturierter Daten aus einem Bild, umfassend:
ein Bildtext-Extraktionsmodell (402) auf der Basis eines tiefen neuronalen Netzes mehrerer Klassen, ausgelegt zum Erhalten einer ersten Informationsmenge und einer zweiten Informationsmenge in dem Bild, wobei das Bild mindestens ein Element strukturierter Daten umfasst;
ein Textteilbild-Erfassungsmodul (403), ausgelegt zum Erhalten mindestens eines Textteilbildes in dem Bild auf der Basis mindestens eines in der ersten Informationsmenge enthaltenen Elements erster Informationen,
ein Textidentifikationsmodell (404), ausgelegt zum Identifizieren von Textinformationen in dem mindestens einen Textteilbild; und
ein Strukturierte-Daten-Darstellungsmodul (405), ausgelegt zum Erhalten mindestens eines Elements strukturierter Daten in dem Bild auf der Basis der Textinformationen in dem mindestens einen Textteilbild und mindestens eines in der zweiten Informationsmenge enthaltenen Elements zweiter Informationen,
wobei das mindestens eine Element erster Informationen Textortsinformationen angibt und die Textortsinformationen einen Ort des mindestens einen Textteilbildes in dem Bild angeben;
das mindestens eine Element zweiter Informationen Textattributinformationen angibt und die Textattributinformationen ein Attribut der Textinformationen in dem mindestens einen Textteilbild angeben; und
jedes Element strukturierter Daten die Textattributinformationen und die Textinformationen umfasst.

7. Vorrichtung (400) nach Anspruch 6,
wobei das Bildtext-Extraktionsmodell (402) auf der Basis eines tiefen neuronalen Netzes mehrerer Klassen ein Backbone-Netz, mindestens ein Merkmalsfusions-Teilnetz, mindestens ein Klassifikations-Teilnetz und mindestens ein Umrandungskasten-Regressionsteilnetz umfasst; und
wobei
das Bildtext-Extraktionsmodell (402) auf der Basis eines tiefen neuronalen Netzes mehrerer Klassen ausgelegt ist zum Eingeben des Bildes in das Backbone-Netz, wobei das Backbone-Netz verwendet wird, um Merkmalsextraktion an dem Bild auszuführen und mindestens einen Merkmalstensor auszugeben;; Eingeben jedes Merkmalstensors, der durch das Backbone-Netz ausgegeben wird, in ein Merkmalsfusions-Teilnetz, wobei das Merkmalsfusions-Teilnetz verwendet wird, um einen dem Merkmalstensor entsprechenden Fusions-Merkmalstensor zu erhalten; und Eingeben des Fusions-Merkmalstensors in ein Klassifikations-Teilnetz und ein Umrandungskasten-Regressionsteilnetz, wobei
das Umrandungskasten-Regressionsteilnetz verwendet wird, um das mindestens eine Textteilbild in dem Bild auf der Basis eines dem Fusions-Merkmalstensors entsprechenden ersten Kandidatenkastens zu lokalisieren, um das mindestens eine Element erster Informationen zu erhalten; und
das Klassifikations-Teilnetz verwendet wird, um ein Textattribut in dem Bild auf der Basis eines dem Fusions-Merkmalstensor entsprechenden zweiten Kandidatenkastens zu klassifizieren, um das mindestens eine Element zweiter Informationen zu erhalten.

8. Vorrichtung (400) nach Anspruch 7, wobei jedes Merkmalsfusions-Teilnetz mindestens eine parallele Faltungsschicht und einen Fusionierer umfasst; und
das Merkmalsfusions-Teilnetz verwendet wird, um den Merkmalstensor, der durch das Backbone-Netz ausgegeben wird, in jeder der mindestens einen parallelen Faltungsschicht einzugeben und eine Ausgabe jeder der mindestens einen parallelen Faltungsschicht in den Fusionierer einzugeben; und der Fusionierer ausgelegt ist zum Fusionieren der Ausgabe jeder der mindestens einen parallelen Faltungsschicht und Ausgeben des Fusions-Merkmalstensors, der dem Merkmalstensors entspricht.

9. Vorrichtung (400) nach Anspruch 7 oder 8, wobei das Umrandungskasten-Regressionsteilnetz ferner verwendet wird, um auf der Basis eines voreingestellten Höhenwerts und eines voreingestellten Seitenverhältniswerts den dem Fusions-Merkmalstensor entsprechenden ersten Kandidatenkasten zu erhalten.

10. Vorrichtung (400) nach Anspruch 7 oder 8, wobei das Klassifikations-Teilnetz ferner verwendet wird, um auf der Basis eines voreingestellten Höhenwerts und eines voreingestellten Seitenverhältniswerts den dem Fusions-Merkmalstensor entsprechenden zweiten Kandidatenkasten zu erhalten.

11. Datenverarbeitungssvorrichtungs-System, das mindestens einen Speicher und mindestens einen Prozessor umfasst, wobei der mindestes eine Speicher ausgelegt ist zum Speichern einer Computeranweisung; und
der mindestens eine Prozessor die Computeranweisung ausführt, um das Verfahren nach einem der Ansprüche 1 bis 5 auszuführen.

12. Nichtflüchtiges lesbares Speicherungsmedium, wobei das nichtflüchtige lesbare Speicherungsmedium durch eine Datenverarbeitungsvorrichtung ausgeführt wird und die Datenverarbeitungsvorrichtung das Verfahren nach einem der Ansprüche 1 bis 5 ausführt.

13. Computerprogrammprodukt, wobei, wenn das Computerprogrammprodukt durch eine Datenverarbeitungsvorrichtung ausgeführt wird, die Datenverarbeitungsvorrichtung das Verfahren nach einem der Ansprüche 1 bis 5 ausführt.

## Revendications

1. Procédé d'extraction de données structurées à partir d'une image, comprenant :
l'obtention (S202) d'un premier ensemble d'informations et d'un deuxième ensemble d'informations dans l'image à l'aide d'un modèle d'extraction de texte d'image basé sur un réseau de neurones profond multiclasse, l'image comprenant au moins un élément de données structurées ;
l'obtention (S203) d'au moins une sous-image de texte dans l'image sur la base d'au moins un élément de premières informations comprises dans le premier ensemble d'informations ;
l'identification (S204) d'informations de texte dans l'au moins une sous-image de texte ; et
l'obtention (S205) d'au moins un élément de données structurées dans l'image sur la base des informations de texte dans l'au moins une sous-image de texte et d'au moins un élément de deuxièmes informations comprises dans le deuxième ensemble d'informations,
l'au moins un élément de premières informations indiquant des informations de position de texte, et les informations de position de texte indiquant une position de l'au moins une sous-image de texte dans l'image ;
l'au moins un élément de deuxièmes informations indiquant des informations d'attribut de texte, et les informations d'attribut de texte indiquant un attribut des informations de texte dans l'au moins une sous-image de texte ; et
chaque élément de données structurées comprenant les informations d'attribut de texte et les informations de texte.

2. Procédé selon la revendication 1, le modèle d'extraction de texte d'image basé sur un réseau de neurones profond multiclasse comprenant un réseau dorsal, au moins un sous-réseau de fusion de caractéristiques, au moins un sous-réseau de classification, et au moins un sous-réseau de régression de boîtes englobantes ; et
l'obtention d'un premier ensemble d'informations et d'un deuxième ensemble d'informations dans l'image à l'aide d'un modèle d'extraction de texte d'image basé sur un réseau de neurones profond multiclasse comprenant :
l'introduction de l'image dans le réseau dorsal, et la réalisation d'une extraction de caractéristiques sur l'image et la fourniture d'au moins un tenseur de caractéristiques via le réseau dorsal ;
l'introduction de chaque tenseur de caractéristiques qui est fourni par le réseau dorsal dans un sous-réseau de fusion de caractéristiques, et l'obtention, via le sous-réseau de fusion de caractéristiques, d'un tenseur de caractéristiques de fusion correspondant au tenseur de caractéristiques ;
l'introduction du tenseur de caractéristiques de fusion dans un sous-réseau de classification et un sous-réseau de régression de boîtes englobantes ;
la localisation, par le sous-réseau de régression de boîtes englobantes, de l'au moins une sous-image de texte dans l'image sur la base d'une première boîte candidate correspondant au tenseur de caractéristiques de fusion, afin d'obtenir l'au moins un élément de premières informations ; et
la classification, par le sous-réseau de classification, d'un attribut de texte dans l'image sur la base d'une deuxième boîte candidate correspondant au tenseur de caractéristiques de fusion, afin d'obtenir l'au moins un élément de deuxièmes informations.

3. Procédé selon la revendication 2, chaque sous-réseau de fusion de caractéristiques comprenant au moins une couche de convolution parallèle et un fusionneur ; et l'introduction de chaque tenseur de caractéristiques qui est fourni par le réseau dorsal dans un sous-réseau de fusion de caractéristiques, et l'obtention, via le sous-réseau de fusion de caractéristiques, d'un tenseur de caractéristiques de fusion correspondant au tenseur de caractéristiques comprenant :
l'introduction du tenseur de caractéristiques qui est fourni par le réseau dorsal dans chacune de l'au moins une couche de convolution parallèle ;
l'introduction d'une sortie de chacune de l'au moins une couche de convolution parallèle dans le fusionneur ; et
la fusion, par le fusionneur, de la sortie de chacune de l'au moins une couche de convolution parallèle, et la fourniture du tenseur de caractéristiques de fusion correspondant au tenseur de caractéristiques.

4. Procédé selon la revendication 2 ou 3, le procédé comprenant en outre :
l'obtention, sur la base d'une valeur de hauteur prédéfinie et d'une valeur de rapport de forme prédéfinie, de la première boîte candidate correspondant au tenseur de caractéristiques de fusion.

5. Procédé selon la revendication 2 ou 3, le procédé comprenant en outre :
l'obtention, sur la base d'une valeur de hauteur prédéfinie et d'une valeur de rapport de forme prédéfinie, de la deuxième boîte candidate correspondant au tenseur de caractéristiques de fusion.

6. Appareil (400) d'extraction de données structurées à partir d'une image, comprenant :
un modèle d'extraction de texte d'image basé sur un réseau de neurones profond multiclasse (402), configuré pour obtenir un premier ensemble d'informations et un deuxième ensemble d'informations dans l'image, l'image comprenant au moins un élément de données structurées ;
un module de capture de sous-image de texte (403), configuré pour obtenir au moins une sous-image de texte dans l'image sur la base d'au moins un élément de premières informations comprises dans le premier ensemble d'informations ;
un modèle d'identification de texte (404), configuré pour identifier des informations de texte dans l'au moins une sous-image de texte ; et
un module de constitution de données structurées (405), configuré pour obtenir au moins un élément de données structurées dans l'image sur la base des informations de texte dans l'au moins une sous-image de texte et d'au moins un élément de deuxièmes informations comprises dans le deuxième ensemble d'informations,
l'au moins un élément de premières informations indiquant des informations de position de texte, et les informations de position de texte indiquant une position de l'au moins une sous-image de texte dans l'image ;
l'au moins un élément de deuxièmes informations indiquant des informations d'attribut de texte, et les informations d'attribut de texte indiquant un attribut des informations de texte dans l'au moins une sous-image de texte ; et
chaque élément de données structurées comprenant les informations d'attribut de texte et les informations de texte.

7. Appareil (400) selon la revendication 6,
le modèle d'extraction de texte d'image basé sur un réseau de neurones profond multiclasse (402) comprenant un réseau dorsal, au moins un sous-réseau de fusion de caractéristiques, au moins un sous-réseau de classification, et au moins un sous-réseau de régression de boîtes englobantes ; et
le modèle d'extraction de texte d'image basé sur un réseau de neurones profond multiclasse (402) étant configuré pour : introduire l'image dans le réseau dorsal, le réseau dorsal étant utilisé pour réaliser une extraction de caractéristiques sur l'image et fournir au moins un tenseur de caractéristiques ; introduire chaque tenseur de caractéristiques qui est fourni par le réseau dorsal dans un sous-réseau de fusion de caractéristiques, le sous-réseau de fusion de caractéristiques étant utilisé pour obtenir un tenseur de caractéristiques de fusion correspondant au tenseur de caractéristiques ; et introduire le tenseur de caractéristiques de fusion dans un sous-réseau de classification et un sous-réseau de régression de boîtes englobantes,
le sous-réseau de régression de boîtes englobantes étant utilisé pour localiser l'au moins une sous-image de texte dans l'image sur la base d'une première boîte candidate correspondant au tenseur de caractéristiques de fusion, afin d'obtenir l'au moins un élément de premières informations ; et
le sous-réseau de classification étant utilisé pour classifier un attribut de texte dans l'image sur la base d'une deuxième boîte candidate correspondant au tenseur de caractéristiques de fusion, afin d'obtenir l'au moins un élément de deuxièmes informations.

8. Appareil (400) selon la revendication 7, chaque sous-réseau de fusion de caractéristiques comprenant au moins une couche de convolution parallèle et un fusionneur ; et
le sous-réseau de fusion de caractéristiques étant utilisé pour introduire le tenseur de caractéristiques qui est fourni par le réseau dorsal dans chacune de l'au moins une couche de convolution parallèle, et introduire une sortie de chacune de l'au moins une couche de convolution parallèle dans le fusionneur ; et le fusionneur étant configuré pour fusionner la sortie de chacune de l'au moins une couche de convolution parallèle, et fournir le tenseur de caractéristiques de fusion correspondant au tenseur de caractéristiques.

9. Appareil (400) selon la revendication 7 ou 8, le sous-réseau de régression de boîtes englobantes étant utilisé en outre pour obtenir, sur la base d'une valeur de hauteur prédéfinie et d'une valeur de rapport de forme prédéfinie, la première boîte candidate correspondant au tenseur de caractéristiques de fusion.

10. Appareil (400) selon la revendication 7 ou 8, le sous-réseau de classification étant utilisé en outre pour obtenir, sur la base d'une valeur de hauteur prédéfinie et d'une valeur de rapport de forme prédéfinie, la deuxième boîte candidate correspondant au tenseur de caractéristiques de fusion.

11. Système de dispositif(s) informatique(s), comprenant au moins une mémoire et au moins un processeur, et l'au moins une mémoire étant configurée pour stocker une instruction d'ordinateur ; et
l'au moins un processeur exécutant l'instruction d'ordinateur pour réaliser le procédé selon l'une quelconque des revendications 1 à 5.

12. Support de stockage lisible non transitoire, l'exécution du support de stockage lisible non transitoire par un dispositif informatique amenant le dispositif informatique à réaliser le procédé selon l'une quelconque des revendications 1 à 5.

13. Produit-programme d'ordinateur, l'exécution du produit-programme d'ordinateur par un dispositif informatique amenant le dispositif informatique à réaliser le procédé selon l'une quelconque des revendications 1 à 5.
